# EUROPEAN PATENT APPLICATION

(11) **EP 2 862 656 A1**
(43) Date of publication of application: **22.04.2015**
(21) Application number: 13188911.5
(22) Date of filing: 16.10.2013
(51) Int. Cl.: B23B 51/04

(54) **A guide pad and a cutter head for a cutting tool**

(71) Applicant: Sandvik Intellectual Property AB, 811 81 Sandviken (SE)
(72) Inventor: Hansson, Per, SE 805 96 Gävle (SE)

(57) **Abstract**

The invention relates to a guide pad for a cutting tool, the guide pad (8) having two opposite located main surfaces (14) and being symmetrically formed, the guide pad further comprising two longitudinal side surfaces (15) and four sliding surfaces (11), two on each main surface, which are located in sequence along a longitudinal axis (13) of the guide pad, and which are convexly curved as viewed in a plane perpendicular to the longitudinal axis. Each sliding surface (11) comprises a fluid conveying formation (22, 24, 32, 34), having a bottom surface (23) and a longitudinal extension in parallel to the longitudinal axis (13), which separates each sliding surface (11) into two convexly curved sliding sub-surfaces (11'). The guide pad also comprises two bearing surfaces (27), along each longitudinal side surface (15) of the guide pad (8), which are located on a respective side of and facing away from a median plane (17) halfway between the main surfaces (14) and having at least some extension in the direction of the median plane perpendicular to the longitudinal axis (13), wherein the bearing surfaces and a bottom surface of the fluid conveying formation are located between the median plane and an imaginary circle arc having the smallest radius of curvature that simultaneously can co-tangentially contact each of the sub surfaces at arbitrary contact points. The invention also relates to a cutter head for such guide pads.

## Description

The present invention relates to a guide pad for a cutting tool, the guide pad having two opposite located main surfaces and being symmetrically formed, the guide pad further comprising two longitudinal side surfaces and four sliding surfaces, two on each main surface, which are located in sequence along a longitudinal axis of the guide pad, and which are convexly curved as viewed in a plane perpendicular to the longitudinal axis.

The invention also relates to a cutter head for such guide pads.

### Background of the invention

Guide pads are used during cutting machining in metals and other hard materials on e.g. cutter heads of deep hole drilling tools in order to prevent wear of the cutter head and to guide the drilling tool during the drilling process and thereby maintain the cutter head on a straight axis line to create a bore hole which is straight with an as high accuracy as possible. For this purpose at least two guide pads are mounted in a respective seating on an outer periphery or envelope surface of the cutter head by means of e.g. screwing, clamping or soldering. A sliding surface of the guide pad which is facing outwards and bears against the circumferential hole wall of the bore hole, is normally formed with a part-circular cross section having the same or a somewhat smaller radius of curvature than the radius of the bore hole.

During the drilling process, the guide pad is exposed to high temperatures due to friction against the hole wall which, in combination with high pressure against the hole wall, makes the guide pads subjected to wear and formation of cracks. In order to reduce the tendency of wear and crack formation, it is common practice to provide a cooling and lubricating fluid, which is fed through channels within the drilling tool into the bore hole. However, the cooling/lubricating fluid can often not to a sufficient extent reach the entire contact zone between the guide pad and the hole wall, which makes the cooling/lubricating insufficient such that the wearing of and formation of cracks will still be considerable.

Guide pads are normally formed of a very hard, durable and hence also expensive material, such as cemented carbide, ceramic, PCD or the like. In order to extend the working life of a guide pad, it is known to provide two different sliding surfaces on the same main surface of a guide pad and more particularly to arrange a sliding surface at the opposite ends of the one and same main surface of the guide pad. By indexing or rotating the guide pad end to end in its median, it is accordingly possible to make the working life twice as long. The prerequisite for this is that the guide pad is not mounted with its sliding surfaces entirely in parallel to the rotary axis of the drilling tool. Instead it is mounted with a small angle in relation to the rotary axis such that only an outer end of each sliding surface bears and wears against the hole wall.

Through WO 2012/172537 it is known a guide pad, which is indexable four times. More precisely, the guide pad is provided with two sliding surfaces on one main surface, which can be positioned to bear against the hole wall by rotating the guide pad end to end, and two identical sliding surfaces on the opposite main surface of the guide pad, which can be positioned to bear against the hole wall by turning or rotating the guide pad upside down around its longitudinal axis. Accordingly, the guide pad is symmetric both in relation to a plane perpendicular to a longitudinal axis of the guide pad as well as in relation to a median plane positioned halfway between the two main surfaces and coinciding with the longitudinal axis. One disadvantage with the guide pad according to this WO-publication is that when it is mounted in a seating in the envelope surface of the cutting tool, there will be no support of the guide pad in the middle between its longitudinal side surfaces, directly behind the contact surface of the sliding surface which is in contact with the hole wall and on which the largest forces are acting during drilling. This is simply impossible to achieve with a guide pad formed in this way since when sliding surfaces on a first main surface are worn and the guide pad is rotated 180° around its longitudinal axis, the guide pad would assume a different position if the worn contact surfaces would rest against support surfaces in the seating than if the unworn contact surfaces would rest against the same support surfaces. This would have a deteriorating effect on the accuracy of the machining.

### Summary of the invention

It is an object of the present invention to provide a guide pad for a cutting tool, which comprises four sliding surfaces and accordingly can be indexable at least four times to place a fresh sliding surface in position for bearing against a machined surface of a work piece and which is improved in relation to prior art guide pads in that it is formed such that it is possible to provide support for the guide pad at its longitudinal side surfaces as well as at a portion between the opposite longitudinal side surfaces. At least this object is achieved by a guide pad according to claim 1.

The invention also relates to a cutter head having essentially the same object as above. At least this object is achieved by a cutter head according to claim 8.

Accordingly, the basis of the invention is the insight that the above object may be achieved by providing each sliding surface of the guide pad with a fluid conveying formation in parallel to the longitudinal axis of the guide pad, as well as providing the guide pad with at least two bearing surfaces along each longitudinal side surface of the guide pad, which are located on a respective side of and facing away from the median plane. Moreover, the bearing surfaces and a bottom surface of the fluid conveying formation are located between the median plane and an imaginary circle arc having the smallest radius of curvature that simultaneously can co-tangentially contact each of the sub surfaces at arbitrary contact points. By the expression "co-tangential" is herein meant that the imaginary circle arc and the sliding sub-surface have a common tangent at the contact point. In other words, the bearing surfaces and the bottom surface of the fluid conveying formation are located within an imaginary arc circle that is in tangential contact with two arbitrary contact points on the sliding sub-surfaces 13', wherein one contact point is located on one respective sliding sub-surface. It is to be noted that in case the sub-surfaces are part-circular and having the same centre and radius of curvature, the imaginary circle arc will have the same radius of curvature as the sub-surfaces. With a guide pad designed in this way, it is ensured that the bearing surfaces as well as the bottom surface are well protected from wear when the associated sliding surface is placed in position for bearing and sliding against a hole wall. Accordingly, the bearing surfaces as well as the bottom surface of the fluid conveying formation can function as support surfaces to position the guide pad in correct position when the guide pad subsequently is turned to place the sliding surfaces on the opposite main surface in position for bearing and sliding against the hole wall.

In order to take advantages of a guide pad formed in this way, it is of course necessary to form also a seating in a cutter head in a mating way. More precisely, a seating of the cutter head according to the invention is in form of a recess having a bottom surface including a projecting or plane first support formation, whichmates with and can support the bottom surface of the fluid conveying formation of the guide pad, and a second support formation at each longitudinal side surface of the seating which has an extension in a direction tangentially in relation to the cutter head and which mates with and are able to bear the guide pad along the bearing surfaces at one side of the guide pad.

Within the above overall ideas the inventive guide pad and cutter head can naturally be varied, modified and formed in many different ways within the scope of the associated claims. As is evident from the herein described and illustrated embodiments, the fluid conveying formation of the guide pad can be formed in many different ways, e.g. as a groove, a plane surface or a slightly curved surface having a larger radius of curvature than the sliding surface, or as a combination of these. Accordingly, the bottom surface of the seating at the cutter head has to be formed in a way to mate with the fluid conveying formation of the guide pad, e.g. as a projecting ridge or as a plane or slightly concave surface.

Also the bearing surfaces at each longitudinal side surface of the guide pad and the corresponding second support formations in the longitudinal side surfaces of the seating can be formed in many different ways. In the exemplary embodiments these surfaces are shown both as step surfaces, being parallel to the median plane of the guide pad, and as bevelled surfaces having an angle in relation to the median plane, wherein a requirement is that they have at least some extension in the direction of the median plane perpendicular to the longitudinal axis of the guide pad, such that they can support the guide pad on a correct level in relation to the circumference of the cutter tool, or in other words, in the radial direction. In the described and illustrated embodiments of the invention, the bearing surfaces as well as the corresponding support formations extend along essentially the entire length of the guide pad and the seating recess, respectively. However, this is not a necessary prerequisite. Instead, each bearing surface and support formation could be split into two or more portions having a shorter length than the total length of the guide pad, e.g. be formed as short portions at each end of the guide pad and seating recess, respectively. This is also true for the first support formation of the seating for supporting the bottom surface of the fluid conveying formation of the guide pad.

Another requirement is that the bearing surfaces of the guide pad are protected from wear when the associated sliding surfaces are placed in position for bearing and sliding against the hole wall. This requirement is fulfilled when the bearing surfaces are, as defined in claim 1, positioned between the median plane and an imaginary circle arc having the smallest radius of curvature that can co-tangentially contact each of the sub-surfaces at arbitrary contact points.

In the following embodiments, the sliding surfaces of the guide pad are illustrated as having the same radius of curvature as the bore hole. However, this is not a necessary condition as long as the sliding surfaces do not have a radius of curvature which is larger than the radius of curvature of the bore hole, because that would lead to that the sliding surfaces would bear against the hole wall with only their outer corner points, which would lead to a rapid wear of the guide pad and possible also scratching of the hole wall. In fact, the sliding surfaces need not be formed with a part-circular curvature, instead they could be curved in any other suitably way, and the individual sliding sub-surfaces need not even have the same curvature or the same centre of curvature.

The guide pad has to be symmetric in order to make the guide pad four times indexable, i.e. to make it possible to rotate the guide pad both in the median plane as well as around its longitudinal axis to place a fresh sliding surface in position for bearing and sliding against a hole wall. The symmetry can be both in form of so called mirror symmetry, i.e. symmetry in relation to a plane, as well as point symmetry, i.e. symmetry in relation to a point

Accordingly, a guide pad according to the invention will, as seen in a cross section of the cutter head, be supported in the radial direction in three separate support points. This means that the supporting of the guide pad will be overdetermined and has to effect that interacting supports of the guide pad and the seatings may be slightly deformed.

In at least one embodiment of the invention, the guide pad is in addition to be supported in the radial direction, also supported in the tangential direction. To this end, the seating can be provided with third support formations on the side surfaces, which interact with tangential bearing surfaces at the longitudinal side surfaces of the guide pad. These tangential bearing surfaces at each longitudinal side surface of the guide pad and the corresponding third support formations in the longitudinal side surfaces of the seating can be formed in many different ways. In the exemplary embodiments these surfaces are shown as a surface facing laterally outward placed between step surfaces constituting the (radial) bearing surfaces on each of the longitudinal sides of the guide pad. The tangential bearing surfaces are also shown as side surfaces of a groove shaped fluid conveying formation cooperating with side surfaces of a ridge constituting a first support formation in the seating. The tangential bearing surfaces can extend in parallel with a central longitudinal plane of the guide pad or at angle. They can extend at the longitudinal sides of the guide pad along the whole length or parts thereof, preferably they have some extension close to the ends of the guide pad for providing sufficient support to the parts active during drilling. The same applies to the corresponding third support formation in the seating.

In at least one embodiment of the invention, the seating is provided with a tangential third support formation at one side only, i.e. at the side that is trailing during operation of the cutter head. Correspondingly, the guide pad can be provided with tangential bearing surfaces only at side portions, which, for each of the four indexing positions, are in cooperation with this tangential support formation at the seating.

The guide pad and the seating can also be provided with axial support surfaces in any conventional suitable manner. Axial support culd also be provided by a fastening means, e.g. a screw or bolt.

### Brief description of the drawings

Exemplary embodiments of the invention will hereinafter be described with reference to the accompanying drawings, in which:
- Fig 1: is a perspective view of a cutting tool in form of a cutter head for deep hole drilling, which is provided with two guide pads according to the invention, of which one is shown detached from the cutter head;
- Fig 2: is a front view of the cutter head according to Fig. 1;
- Fig 3: is a cross section through a work piece and a bore hole being drilled by means of a cutter head according to Figs. 1 and 2;
- Fig 4: is a longitudinal section along the line IV-IV in Fig. 3;
- Fig 5-9: are a perspective view, a view from above of a main surface, a side view, a longitudinal section and an end view, respectively, of a first embodiment of a guide pad according to the invention;
- Fig 10a: is a cross section of a guide pad and a seating portion of a cutter head in a disengaged stage;
- Fig 10b: is a cross section according to Fig. 10a with the guide pad being mounted in the seating of the cutter head and bearing and sliding against a hole wall of a work piece during boring a hole in the same;
- Fig 11: is an enlarged cross section through a portion of a guide pad according to Figs. 5-9 being positioned within a bore hole of a work piece during drilling of the hole;
- Fig 12: is an enlarged cross section according to Fig. 11 of a second embodiment of a guide pad;
- Fig 13: is an enlarged cross section according to Fig. 11 of a third embodiment of a guide pad;
- Fig 14a: is a cross section of a guide pad and a seating portion of a cutter head in a disengaged stage;
- Fig 14b: is a cross section according to Fig. 14a with the guide pad being mounted in the seating of the cutter head and bearing and sliding against a hole wall of a work piece during boring a hole in the same;
- Figs 15-17: are cross sections according to Figs. 14a and 14b of different embodiments of the guide pad;
- Fig 18: is a perspective view of a further embodiment of a guide pad according to the invention; and
- Fig 19: a cross section through a guide pad illustrating the location of the bearing surfaces in relation to an imaginary circle arc and the median plane:

### Detailed description of embodiments of the invention

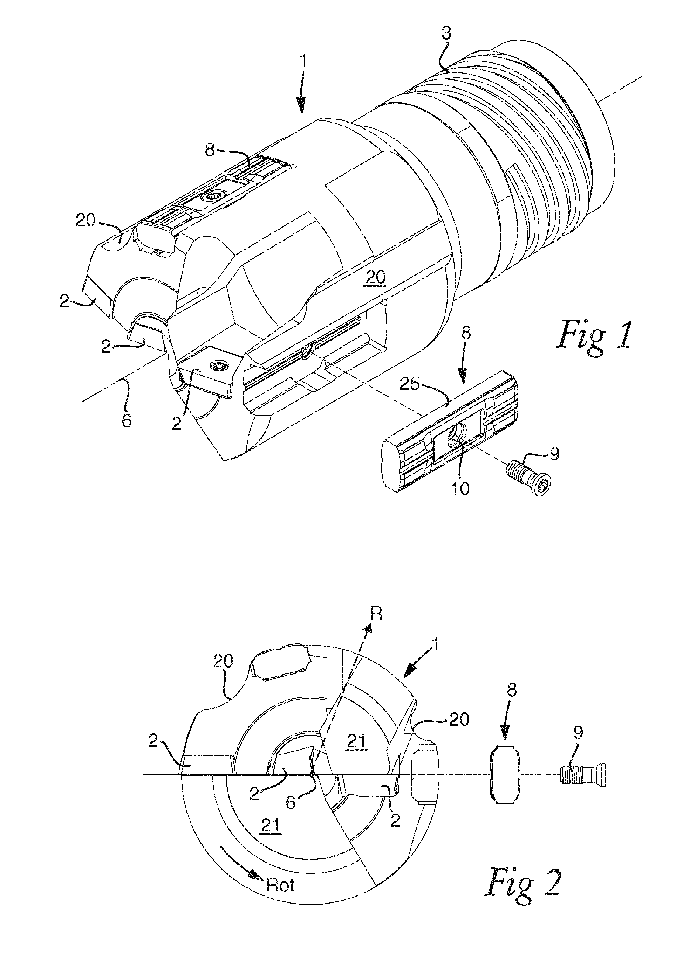

Reference is first made to Figs. 1 and 2, which illustrate a cutting tool in form of a cutter head 1 for a drilling tool in a perspective view and a front view, respectively. The cutter head is in a front end provided with cutting inserts 2 and in a rear end with an external thread 3. The cutter head is by means of the external thread adapted to be attached to a not shown drill tube, which can be carried by a suitable supporting device.

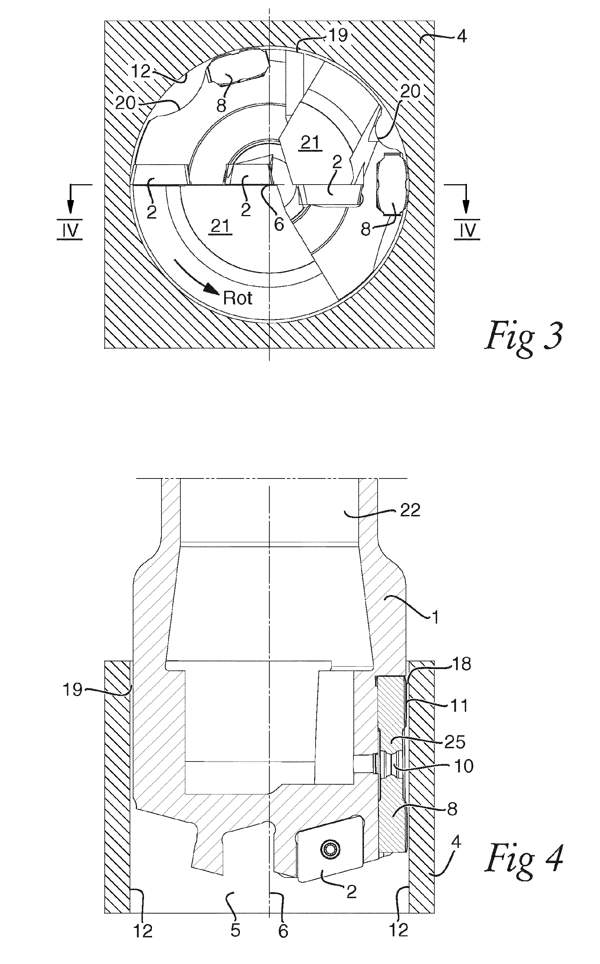

As is best seen from Figs. 2 and 3, of which the latter shows a cross section through a work piece 4 and the front end of the cutter head during drilling a hole in the work piece, the cutter head 1 comprises three cutting inserts 2, which are positioned such that their respective cutting edges are positioned along an essentially straight line perpendicular to a rotational axis 6 of the cutter head, with two cutting inserts 2 positioned mainly on one side of the rotational axis and one on the other side facing in the opposite direction. During rotation of the cutter head 1 in relation to the work piece 4 in the direction of an arrow Rot, the cutting inserts 2 will cut and remove borings or chips from the work piece such that a bore hole 5 is formed in the work piece. The arrangement of the cutting inserts with two cutting inserts on one side of the rotational axis and the other cutting insert on the other side and facing in the opposite direction, will have to effect that the cutter head 1 will be actuated by a resultant force directed approximately as is illustrated by an arrow R. In order to balance and take up the resultant force R, a guide pad 8 is positioned on each side of the resultant force R and carefully mounted, by means of a screw 9 through a hole 10 in the guide pad, such that an outer, forward contact surface of a sliding surface 11 of each guide pad will bear and slide against the inner surface of a hole wall 12 of the hole. In this way it is ensured that the cutter head will not wear against the hole wall. Instead, the small, indexable and exchangeable guide pads 8 will be subjected to essentially all wearing against the hole wall 12 and they will also guide and centre the cutter head and ensure that the cutter head follows a straight line during drilling.

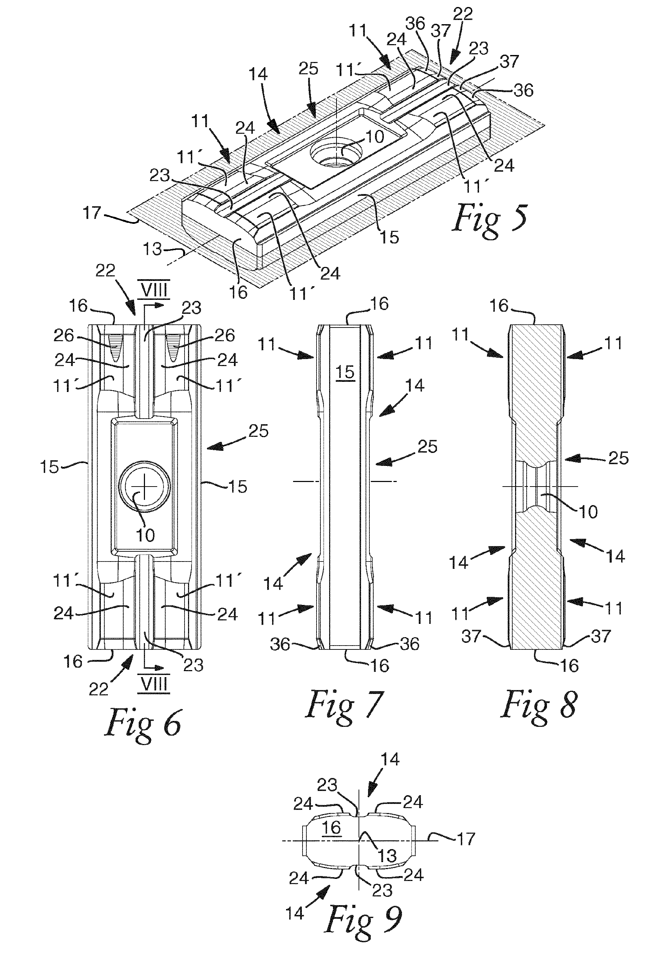

Figs. 5-9 illustrate in detail the design of an embodiment of a guide pad according to the invention. The guide pad is generally formed as a parallelepiped, which has a longitudinal axis 13 and comprises two opposite main surfaces 14, two opposite longitudinal side surfaces 15 and two opposite end surfaces 16. The illustrated guide pad is symmetric in relation to a median plane 17 and is indexable four times, i.e. it comprises four sliding surfaces 11, two on each main surface 14, which in sequence can be placed in position for bearing and sliding against the hole wall 12 by rotating the guide pad, on the one hand by rotating the guide pad in the median plane 17 of the guide pad and on the other hand be rotated around its longitudinal axis 13 to expose the other main surface towards the hole wall during drilling. The sliding surfaces are convexly curved as viewed in a plane perpendicular to the longitudinal axis 13, wherein the radius of curvature is equal to or smaller than the radius of curvature of the holes 5 for which they are adapted to be used. In order to ensure that only one of the sliding surfaces 11 on each main surface 14 of the guide pad is subjected to wear at a time, the guide pad is mounted to the cutter head with a small inclination of its longitudinal axis 13 in relation to the longitudinal axis 6 of the cutter head, as is illustrated in the longitudinal section of Fig. 4. In this way a small gap 18 is established between the hole wall 12 and the rear sliding surface 11 of the guide pad and only the forward end of the forward sliding surface is in contact with the hole wall.

During drilling by means of the drilling tool, cooling and lubricating fluid, preferably oil, is supplied to the bore hole such that the fluid is brought to flow around the circumference of the cutter head 1, on the one hand for cooling and lubricating the cutting inserts 2 during cutting but also for cooling and lubricating the guide pads 8, which otherwise run a risk of being overheated with subsequent excess wear and crack formation due to the frictional heat generated as they bear and slide against the hole wall during drilling. The cooling and lubricating fluid flows along essentially the entire circumference of the cutter head since only the sliding surfaces 11 of the guide pads 8 bear and slide against the hole wall such that a small gap 18 is formed between the rest of the cutter head 1 and the hole wall, as is seen from Fig. 4. However, there are also formed first and second cooling ducts 20 in the direction of the longitudinal axis 6 along the envelope surface of the cutter head to ensure a sufficient large flow of cooling and lubricating fluid to the cutting end. In order to enable subsequent discharge of the fluid together with the chips produced during drilling, the cutter head is provided with first and second openings 21 and an inner channel 22, which is in fluid communication with an inner bore of the drill tube. The first opening 21 is positioned in the area in front of the two cutting inserts 2 on the one side of the rotational axis 6, and the second opening 21 in the area in front of the single cutting insert 2 on the other side of the rotational axis. During drilling operation with the cutter head, cooling and lubricating fluid is fed under pressure into the bore hole and flows along the outer periphery of the cutter head, and especially along the cooling ducts 20, to the forward end of the cutter head at the bottom of the bore hole. There the cooling and lubricating fluid flows inwards towards the rotational axis 6, passes by the cutting inserts 2 and washes away the chips and then flows into the first and second openings 21 and through the inner channel 22 and away from the cutter head. As is seen from Figs. 2 and 3, the first and second cooling ducts 20 are, as seen in direction of rotation, located in the area in front of the respective guide pads 8, which has to effect that plenty of cooling fluid is available in front of the guide pads and is forced into the contact zone between each guide pad and the hole wall 12 during rotation.

In order to improve the cooling and lubricating of the guide pads, each of them is formed with a fluid conveying formation 22 in each sliding surface 11. The fluid conveying formation has a longitudinal extension in a direction in parallel to the longitudinal axis 13, which in its turn is nearly parallel to the rotational axis 6 of the cutter head. Accordingly, each fluid conveying formation 22 separates the associated sliding surface 11 into two sliding sub-surfaces 11'. In the embodiment illustrated in Figs. 5-9, the fluid conveying formation comprises a groove 23, which extends in parallel to the longitudinal axis of the guide pad and which on both sides adjoins to a planar surface 24, which further increases the size of the fluid conveying formation 22. Moreover, the fluid conveying formation 22 has a width, in a direction in parallel to the median plane 17 and perpendicular to the longitudinal axis 13, that is smaller than half of the guide pad width. Thereby sufficient contact between the guide pad and the hole wall is ensured.

As is evident from the Figs. 4, 5, 7 and 8, the guide pad has a somewhat smaller thickness in a middle portion 25 around the mounting hole 10 for the screw 9 as well as at the side surfaces 15 than at each end of the sliding surfaces 11 at the end surfaces 16. In this way it is easy for the cooling and lubricating fluid to flow in between the guide pad 8 and the hole wall 12 at the middle portion 25 and then follow the fluid conveying formation 22 in the longitudinal direction of the guide pad towards the cutting end for cooling and lubricating the contact surface of each sliding subsurface 11'. In order to facilitate insertion and retraction of the cutter head 1 into and out from a hole in a work piece, the ends of the guide pad are provided with first transition surfaces 36 between each sliding sub-surface 11' and the end surface 16 as well as a second transition surface 37 between the fluid conveying formation 22 and the end surface. The transition surfaces 36, 37 can be formed as chamfers, as is illustrated in the drawings, but could also have other shapes. For example be formed as a rounding off having a suitable radius. Accordingly, the guide pad will be somewhat tapered towards the end surface 16 and neither the sliding sub-surfaces 11' nor the fluid conveying formation 22 will extend all the way to the end surface.

When starting drilling with a fresh, unworn sliding subsurface, the contact between the guide pad 8 and the hole wall 12 will, due to the inclination of the guide pad in relation to the rotational axis, at first have the form of merely a small contact point, in the case the radii of the sub-surfaces 11' are smaller than the radius of the hole, or as a curved line, in the case the radii of the subsurfaces are equal to the radius of the hole. However, soon after put into operation of a fresh sliding surface, the contact surface at each subsurface will start to propagate due to incipient wear of the guide pad and may after a while have the shape as is shown at the areas 26 ruled with feint lines in Fig. 6, as they might look in case the sliding subsurfaces have a radius of curvature which is somewhat smaller than the radius of the bore hole.

One problem with a guide pad having sliding surfaces on opposite main surfaces, as the embodiment illustrated in Figs. 5-9, is that when the sliding surfaces on a first main surface are worn out and the guide pad is turned to place a sliding surface on the opposite main surface in position for bearing and sliding against the hole wall, the sliding surfaces on the first main surface, which now have been deformed due to the wear, cannot serve as bearing surfaces for holding and supporting the guide pad in a correct position within close tolerances in relation to the cutter head.

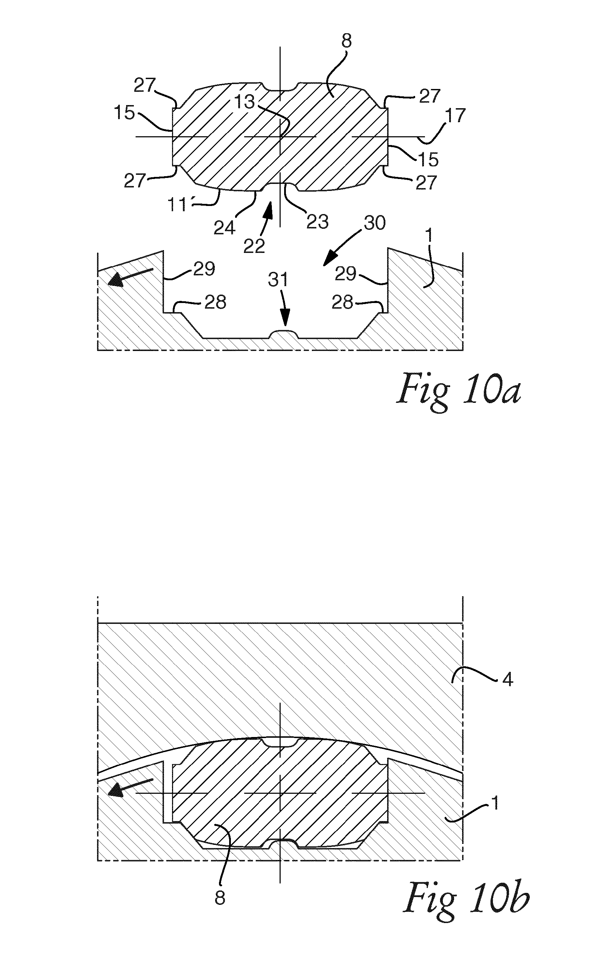

To overcome this problem, the guide pad 8 is, as is more clearly seen from the enlarged cross sections of the guide pad, the cutter head 1 and the work piece 4 according to Figs 10a and 10b, provided with two bearing surfaces 27, along each longitudinal side surface 15 of the guide pad, which are located on a respective side of and facing away from the median plane 17 and having at least some extension in the direction in parallel to the longitudinal axis 13.

The bearing surfaces 27 and the bottom surface of the fluid conveying formation 22 on the same side of the median plane 17 are moreover located between the median plane 17 and an imaginary circle arc having the smallest radius of curvature that simultaneously can co-tangentially contact each of the sliding sub-surfaces 11' at arbitrary contact points, i.e. a circle arc having the same tangent as the sliding sub-surfaces in the contact points. It is to be noted that in case the sliding sub-surfaces are part-circular and having the same centre and radius of curvature, the imaginary circle arc will have the same radius of curvature as the sliding sub-surfaces.

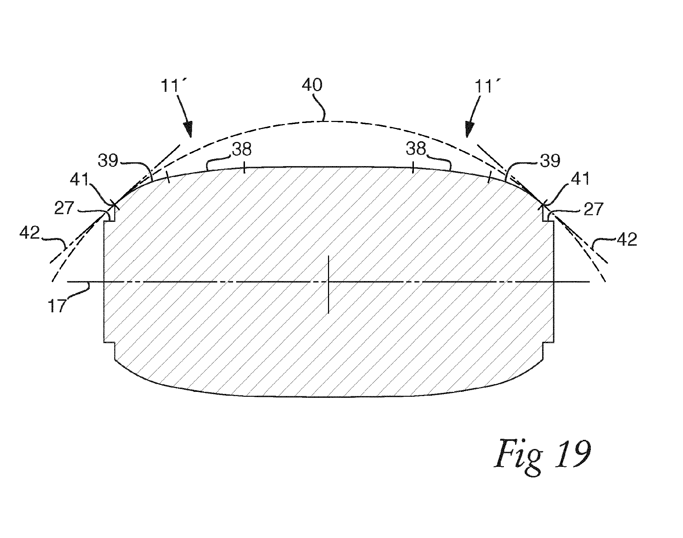

In Fig. 19 is illustrated an alternative embodiment in which each sliding sub-surface 11' is composed of two part-circular surfaces having different radii of curvature, i.e. an inner part-circular surface 38, with a comparatively large radius of curvature, and an outer part-circular surface 39 having a smaller radius of curvature. An imaginary circle arc 40 having the smallest radius of curvature that simultaneously can co-tangentially contact each of the sliding sub-surfaces 11' at arbitrary contact points 41 is illustrated in the figure. I.e. the imaginary circle arc 40 has the same tangent 42 as the part-circular surface at each contact point 41. As is evident from the drawing, the bearing surfaces 27 are located between the imaginary circle arc 40 and the median plane 17 and will accordingly be protected from wear when the sliding sub-surfaces on the same side of the median plane bear and slide against a hole wall of a work piece.

With a guide pad formed in this way it is no risk that the bearing surfaces 27 could be worn out through sliding against the hole wall when they are turned towards and facing the same. Accordingly, the guide pad can always be supported in a correct position along its longitudinal side surfaces against second support surfaces 28 along opposite longitudinal side surfaces 29 of a seating 30 in form of a recess in the cutter head, which second support surfaces 28 mates with and bears against the bearing surfaces 27 at one side of the guide pad when it is mounted in the seating. Moreover, the guide pad is supported in the middle along at least a part of its longitudinal axis by letting a surface of the fluid conveying formation 22 rest against a first support formation 31 in form of a plane, a ridge formed or otherwise suitably shaped bottom surface of the seating recess for the guide pad, since also the fluid conveying formation is protected against wear when it is turned towards the hole wall. In this way the guide pad will have sufficient support in the area opposite of the fluid conveying formation being turned towards and facing the hole wall, which fluid conveying formation otherwise could function as a stress concentration and give rise to cracking.

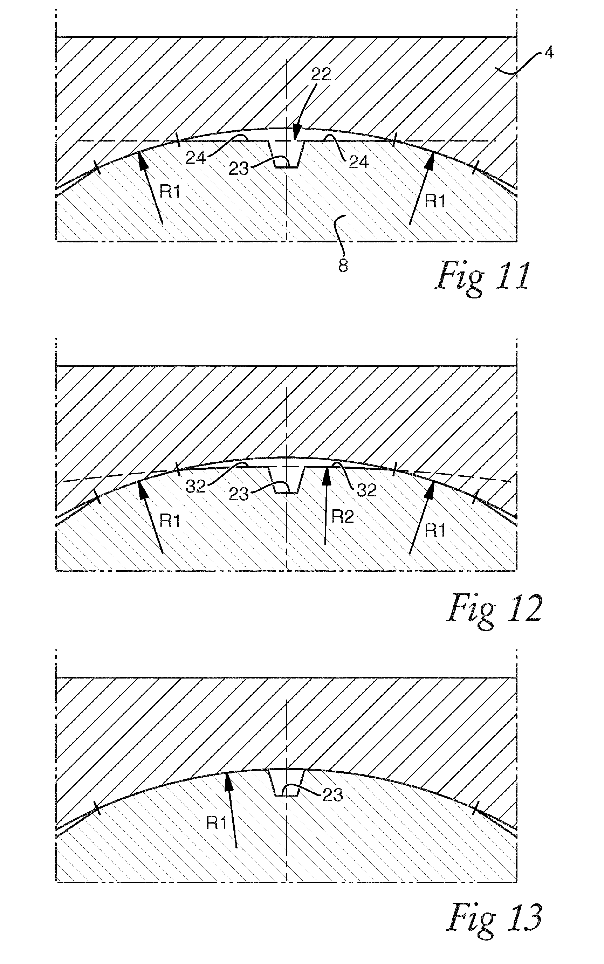

The Figs. 11-13 show, in further enlargement and exaggerated radii of curvatures for enhanced visibility, cross sections through a part of a guide pad 8 and a work piece 4, by which the fluid conveying formations 22 are formed in different ways. Fig. 11 corresponds to the embodiment according to Figs. 5-10, where the fluid conveying formation is composed of a groove 23 and adjoining planar surfaces 24 on each side. Fig. 12 is similar to Fig. 11. However, here the planar surfaces are exchanged with convexly curved surfaces 32 having a radius of curvature R2, which is larger than the radius of curvature R1 of the sliding sub-surfaces. In Fig. 13 the fluid conveying formation is formed of only a groove 23.

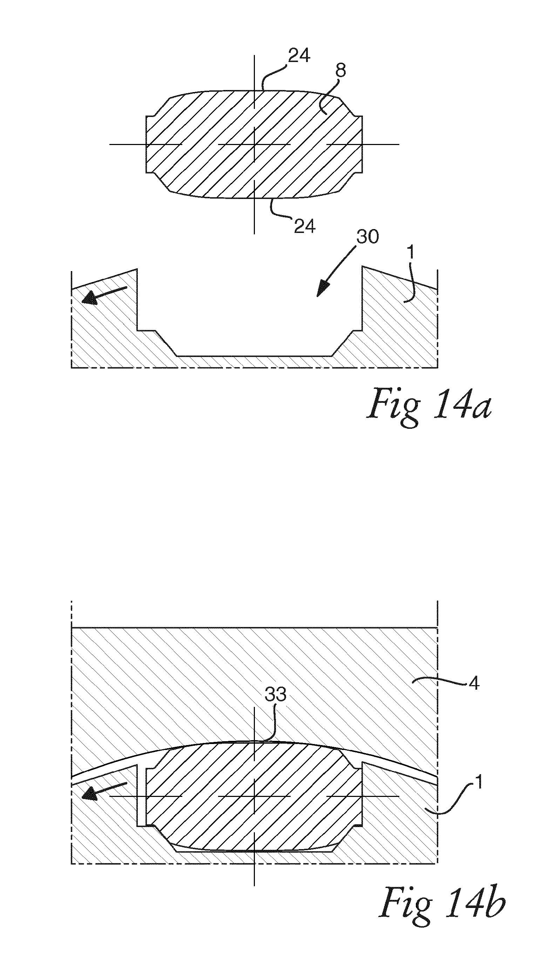

In Figs. 14a-14b is illustrated an embodiment of a guide pad 8 according to the invention which is similar to the embodiment according to Figs. 5-10. However, here the fluid conveying formation is formed of a planar surface 24 alone which, when the guide pad is mounted in the seating 30, will form a small gap 33 between the guide pad and the work piece and which will function as a fluid conveying formation. Accordingly, the support formation for the fluid conveying formation at the bottom of the seating in the cutter head, is also formed as a planar surface.

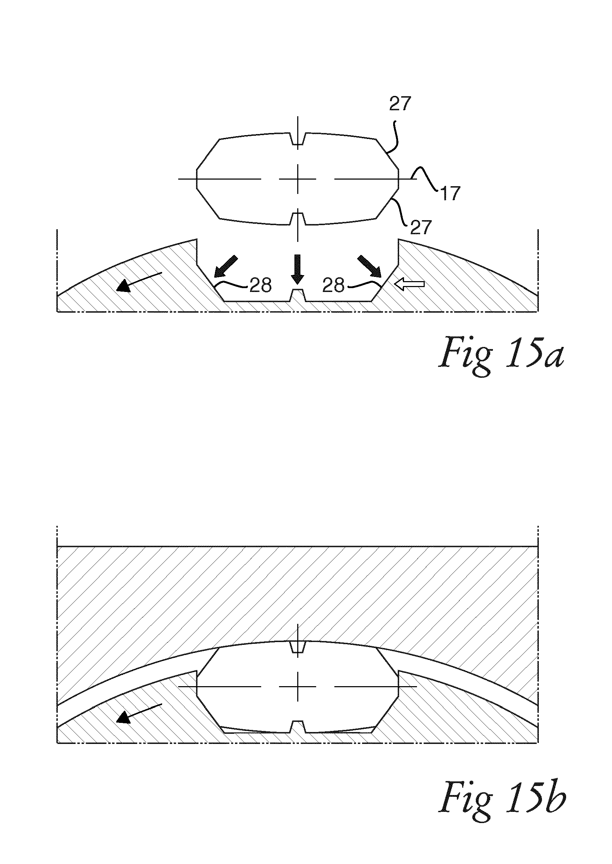

Figs. 15-17 illustrate different designs of the bearing surfaces along each longitudinal side surface of the guide pad as well as of the support formation along the longitudinal side surfaces of the seating in the cutter head. In Fig 15 the bearing surfaces 27 are bevelled, i.e. formed in an angle, in relation to the median plane 17. However, they still have at least some extension in parallel to the median plane. The support surfaces 28 are formed in a corresponding way. In this embodiment, the bearing surface 27 also constitutes a tangential bearing surface. Tangential support is also provided by the side surface 15 between the radial bearing surfaces 27. In the seating, the longitudinal side walls 28 constitute both the radial second support formation and the tangential third support formation. In Fig. 14b, it can be seen how tangential support is provided only at the side that during rotation in operation is trailing.

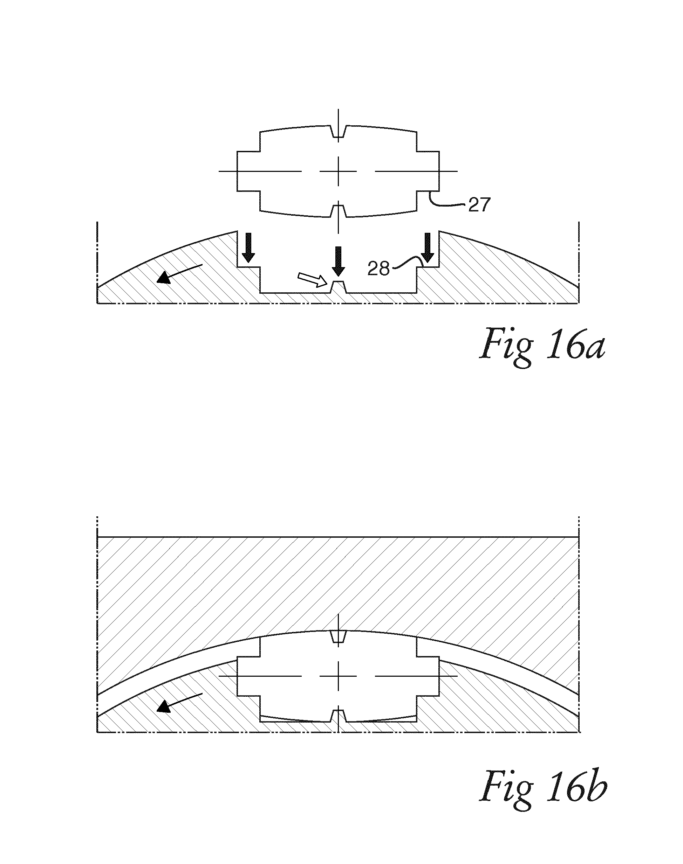

In Fig. 16 all of the radial bearing surfaces 27 are parallel to the median plane and the second support surfaces 28 are formed in a similar way. Tangential support is provided by one of the flanks of the ridge constituting the first support formation in the seating as indicated by the white arrow. This support flank cooperates with a side surface of the groove 23 thus constituting a tangential bearing surface.

Figs. 16 is also an example of an embodiment wherein the bearing surfaces 27 are arranged on side protrusions extending in the longitudinal direction at least a portion at the longitudinal ends of the guide pad, which the side protrusions have a rectangular cross section.

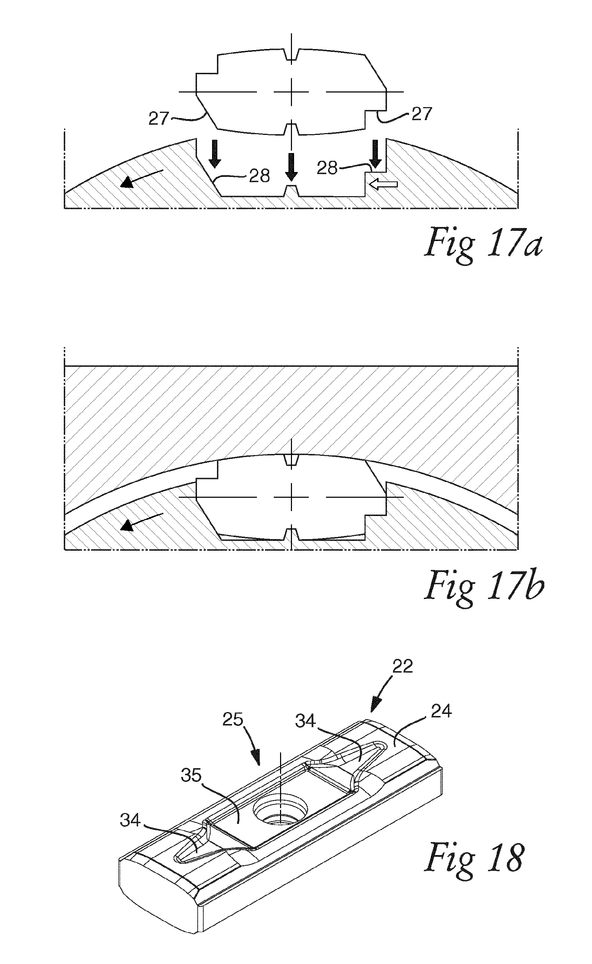

In Fig. 17 one of the bearing surfaces 27 on one side of the median plane is bevelled while the other bearing surface on the same side of the median plane is parallel to the median plane. The side surfaces have the shape shown in Fig. 17 only at one of the longitudinal ends of the guide pad. In a cross section at the other end, each bearing surface that is bevelled in Fig. 17 will be parallel to the median plane, and each bearing surface that in Fig. 17 is parallel to the median plane will be bevelled. The seating has corresponding changing side surfaces along its axial extension. Thereby, the guide pad will be indeaxable by rotating in the median plane. Tangential support is provided by a bearing surface cooperating with a third tangential support formation surface, which are parallel to a central longitudinal plane as indicated by the white arrow.

Fig. 18 illustrates an alternative embodiment of a guide pad according to the invention by which each fluid conveying formation 22 is formed as a combination of a planar surface 24 at the ends of the guide pad and a channel-shaped recess 34, which extends in the axial direction from a trough-formed recess 35 at the middle portion 25 of the guide pad and is terminated before reaching the end surface of the guide pad. The channel-shaped recess 34 is formed with a large width at the middle portion and is tapering towards the end surface. With a fluid conveying formation formed in this way it is possible to convey a comparatively large amount of cooling and lubricating fluid to the contact zone between the guide pad and the hole wall.

## Claims

1. A guide pad for a cutting tool, the guide pad (8) having two opposite located main surfaces (14) and being symmetrically formed, the guide pad further comprising two longitudinal side surfaces (15) and four sliding surfaces (11), two on each main surface, which are located in sequence along a longitudinal axis (13) of the guide pad, and which are convexly curved as viewed in a plane perpendicular to the longitudinal axis, **characterized in that** each sliding surface (11) comprises a fluid conveying formation (22, 24, 32, 34), having a bottom surface (23) and a longitudinal extension in parallel to the longitudinal axis (13), which separates each sliding surface (11) into two convexly curved sliding sub-surfaces (11'), and **in that** the guide pad also comprises two bearing surfaces (27), at each longitudinal side surface (15) of the guide pad (8), which bearing surfaces (27) are located on a respective side of and facing away from a median plane (17) halfway between the main surfaces (14), wherein the bearing surfaces and the bottom surface of the fluid conveying formation are located between the median plane and an imaginary circle arc (40) having the smallest radius of curvature that simultaneously can co-tangentially contact each of the sub-surfaces at arbitrary contact points (41).

2. The guide pad according to claim 1, wherein the bearing surfaces (27) are arranged on side protrusions extending in the longitudinal direction at least a portion at the longitudinal ends of the guide pad, wherein the side protrusion has a rectangular cross section.

3. The guide pad according to claim 1 or 2, wherein it comprises a groove-shaped fluid conveying formation (22).

4. The guide pad according to claim 1 or 2, wherein it comprises a planar fluid conveying formation (24) or convexly curved fluid conveying formation (32), which convexly curved fluid conveying formation has a convexly curved shape as viewed in a plane perpendicular to the longitudinal axis (13) and a larger radius R2 of curvature than a radius R1 of curvature of the sliding surface (11).

5. The guide pad according to claim 1 or 2, wherein it comprises a fluid conveying formation in form of a channel-shaped recess (34), which extends in the axial direction from a middle portion (25) of the guide pad (8) and is terminated before reaching an end of the sliding surface (11) at the end surface (16) of the guide pad.

6. The guide pad according to the combination of the claims 3 and 4, wherein the groove-shaped fluid conveying formation (22) is formed within the planar or convexly curved fluid conveying formation (24 or 32).

7. The guide pad according to the combination of the claims 4 and 5, wherein the channel-shaped recess (34) is formed within the planar or convexly curved fluid conveying formation (24 or 32) such that the channel-shaped recess is terminated before reaching the end of the sliding surface (11), whereas the planar or convexly curved fluid conveying formation extends all the way to the end of the sliding surface.

8. The guide pad according to any of the preceding claims, wherein it is formed with a smaller thickness in a middle portion (25) than at each end (16).

9. A cutter head for removing material from a work piece (4), wherein the cutter head is rotatable around a longitudinal rotary axis (6) and comprises at least one seating for a cutting insert (2) at an end surface of a cutter head (1) of the cutting tool, and at an envelope surface at least two seatings (30) for guide pads (8) according to any of the preceding claims, wherein the seatings for the guide pads are in form of recesses having at least a bottom surface, which extends essentially longitudinally in parallel with the rotary axis and essentially tangentially in relation to the envelope surface, and two longitudinal side surfaces (29) essentially in parallel to the rotary axis, **characterized in that** the bottom surface of each seating (30) for the guide pads (8) comprises a first support formation (31), which mates with and bears against the bottom surface (23) of the fluid conveying formation (22, 24, 32, 34) at one main surface (14) of the guide pad when it is mounted in the seating, and **in that** each longitudinal side surface (29) of each seating for the guide pads comprises a second support formation (28), which mates with and bears against each bearing surface (27) at one side of the median plane (17) of the guide pad when it is mounted in the seating.

10. The cutter head according to claim 9, wherein the first support formation (31) includes a ridge extending in the longitudinal direction at least a portion at the front end of the seating.

11. The cutter head according to claim 9 or 10, wherein the second support formation (28) constitutes a radially outward facing surface arranged on a step in the recess wall (2).
